# FASCICULE DE BREVET EUROPEEN

(11) **EP 1 982 600 B1**
(45) Date de publication et mention de la délivrance du brevet: **18.01.2017**
(21) Numéro de dépôt: 08290356.8
(22) Date de dépôt: 11.04.2008
(51) Int. Cl.: A23C 19/076, A23C 23/00

(54) **Préparation alimentaire à base de fromage frais et procédé de fabrication**
Lebensmittelzubereitung auf der Basis von Frischkäse und deren Herstellungsverfahren
Food preparation based on fromage frais and method of manufacturing same

(30) Priorité: 13.04.2007 FR 0702697
(43) Date de publication de la demande: 22.10.2008
(73) Titulaire: BONGRAIN S.A., 78220 Viroflay (FR)
(72) Inventeur: Knossalla, Martin, 87487 Wiggensbach (DE)
(74) Mandataire: Gevers & Orès

(56) Documents cités:
- EP-A- 1 579 769
- EP-A- 1 611 793
- EP-A1- 0 289 096
- EP-A1- 0 415 832
- EP-B1- 0 773 713
- EP-B1- 1 033 917
- CA-A1- 2 011 526
- DE-A1- 1 492 765
- DE-A1- 19 528 936
- GB-A- 983 752
- JP-A- 2007 151 418
- US-B1- 6 558 716
- ANONYMOUS: 'Frischkäse', [en ligne] 13 Juin 2013, XP055073551 Extrait de l'Internet: <URL:http://de.wikipedia.org/wiki/Frischk%C 3%A4se> [extrait le 2013-07-30]
- 'Fromage à pâte fraîche', [en ligne] 29 Juillet 2013, XP055073552 Extrait de l'Internet: <URL:http://fr.wikipedia.org/wiki/Fromages_ %C3%A0_p%C3%A2te_fra%C3%AEche> [extrait le 2013-07-30]
- ANONYMOUS: 'Les produits laitiers - Fromage frais', [en ligne] 01 Janvier 2013, XP055073555 Extrait de l'Internet: <URL:http://www.meilleurduchef.com/cgi/mdc/ l/fr/apprendre/dietetique/boire_manger/prod uits_laitiers/fromage_frais.html> [extrait le 2013-07-30]

## Description

La présente invention se rapporte à une préparation alimentaire à base de fromage frais ayant un goût agréable, une bonne tenue en tranche et qui soit facile à tartiner. Elle concerne également un procédé pour la fabrication d'une telle préparation à base de fromage frais.

De nombreuses préparations alimentaires à base de fromage frais sont connues. Elles sont découpées en tranches ou en portions et emballées individuellement ou par lots de plusieurs portions individuelles. Une telle présentation permet une meilleure conservation par rapport à une préparation à base de fromage frais emballée en quantités importantes. Ainsi, lorsque l'emballage d'une portion individuelle est ouvert, les emballages des autres portions restent intacts. Si la préparation à base de fromage frais était emballée sous forme d'un produit à portionner avant consommation, le stockage de la partie non consommée serait rendu délicat par le fait que l'emballage est ouvert et n'est donc plus imperméable à l'air et aux bactéries.

A cette fin de présentation, les préparations à base de fromage frais doivent permettre un maintien durable en tranche ou en portion. Par maintien durable, il faut comprendre un maintien en tranche pendant une période dépassant au moins la date limite de consommation. Si le maintien en tranche ou en portion est insuffisant, la préparation à base de fromage frais peut se déstructurer et éventuellement couler hors de l'emballage individuel lors de l'ouverture.

En outre, la préparation à base de fromage frais doit pouvoir être préparée facilement par un procédé industriel. Notamment, elle doit pouvoir être tranchée et conditionnée facilement, elle doit présenter un aspect attirant pour le consommateur et elle doit être dotée de qualités organoleptiques (goût, texture) satisfaisantes.

Afin de résoudre le problème de maintien durable en tranche, il a déjà été proposé, dans le document EP 1 611 793, d'ajouter à la préparation à base de fromage frais, de la gélatine comme épaississant et des stabilisants dans un rapport en poids respectif supérieur à 1/1. En outre, cette préparation à base de fromage frais contient plus de 90% en poids de fromage frais.

Toutefois, ce rapport de gélatine sur épaississant présente l'inconvénient de conférer à la composition soit une texture trop gélatineuse et une consistance qui ne permet pas de l'étaler facilement notamment sur une tartine de pain par exemple, soit une texture trop molle qui ne permet pas son découpage en tranches.

Par ailleurs, le document EP 0 773 713 décrit une préparation à base de fromage frais comprenant du fromage frais auquel peut être mélangée une ou plusieurs matières grasses, et de 0,1 à 2% d'agents structurants, parmi lesquels sont cités les protéines de petit lait, la gélatine, la gomme de caroube, la carboxyméthylcellulose. Deux ou plus de ces agents structurants peuvent être éventuellement mélangés. Cette préparation est extrudée et présente une bonne tenue.

Dans ce document, les exemples de préparation associent systématiquement l'utilisation de crème à celle du beurre, ce qui donne un produit assez gras. Or, les consommateurs de fromage frais sont généralement soucieux du caractère diététique de leur alimentation. L'un des objectifs de la présente invention a été de pouvoir préparer un produit à base de fromage frais dont la teneur en matière grasse puisse être moins élevée que dans l'art antérieur tout en conservant une tenue satisfaisante, et un produit aisément tartinable.

Les préparations à base de fromage frais selon le document EP 0 773 713 présentent l'inconvénient d'avoir soit une texture trop gélatineuse soit une consistance qui ne permet pas leur étalement sur une tartine.

Le document DE 19528936 décrit un produit alimentaire dénommé « fromage frais » qui est préparé à partir de crème comportant au moins 32% de matière grasse, d'une culture de fermentation, de lait, d'amidon, de gélatine et de carraghénane.

Le document GB-983,752 décrit un procédé de production de fromages fermentés à partir de fromage frais. Des additifs tels que la gélatine, l'agar-agar, des alginates, des pectines, peuvent être incorporés dans la préparation du fromage frais.

L'invention vise à résoudre les inconvénients décrit précédemment en proposant une préparation à base de fromage frais facile à préparer industriellement, ayant une bonne tenue en tranche tout en présentant des qualités organoleptiques améliorées et un coût de production diminué. En outre l'on a cherché à obtenir un produit doté d'une texture souple qui permette de l'étaler facilement sur une tartine.

L'invention a donc pour objet une préparation alimentaire comprenant :
i. du fromage frais,
ii. de 0.65 à 1%, en poids par rapport au poids total de la préparation, de gélatine,
iii. de 1,05 à 6%, en poids par rapport au poids total de la préparation, d'au moins un composé de stabilisation choisi parmi les hydrocolloïdes végétaux,
iv. de façon facultative de la crème.

Par hydrocolloïde végétal on entend un composé de structure macromoléculaire d'origine végétale dispersable dans l'eau. Cet ensemble inclut les composés suivants : l'agar-agar, la farine de guar, les carraghénanes, la farine de caroube, la gomme xanthane, l'amidon, l'amidon modifié, la carboxyméthylcellulose, la pectine, les alginates, la gomme arabique, la gomme de tragacanthe, la farine de graines de caroube.

De façon non impérative, cette préparation peut en outre comprendre de la crème, qu'il s'agisse d'une crème fraîche (fermentée) ou d'une crème UHT. Cette préparation alimentaire se caractérise par un rapport en poids fromage frais/crème compris entre 1/3 et 1/0, par un pourcentage en poids total fromage frais + crème, par rapport au poids de la préparation, compris entre 50 et 98,95%.

Avantageusement, le rapport en poids entre le fromage frais et la crème est compris entre 1/3 et 2,5/1.

Le fromage frais se distingue des autres fromages par le fait que la coagulation du lait est généralement provoquée par acidification avec ou sans apport de chaleur, et par le fait que le fromage frais n'est jamais mis à maturation avant consommation. De façon occasionnelle, de la présure peut être employée pour contribuer à la coagulation du lait.

La crème est constituée des globules de matière grasse du lait, séparés de celui-ci par densité. De façon traditionnelle, la fabrication de la crème se fait selon un processus naturel : lorsque le lait repose, les éléments qui le composent se séparent en fonction de leur densité. Les globules de matière grasse étant plus légers que l'eau remontent à la surface pour former une couche de crème. En production industrielle, la formation de la crème est accélérée par passage du lait dans une écrémeuse centrifuge.

Deux type de crèmes alimentaires se trouvent sur le marché : la crème fraîche traditionnelle, qui est acide, épaisse et ne peut être conservée que sur une courte durée (quelques jours à quelques semaines) à température réfrigérée, et la crème UHT qui est douce, généralement fluide et peut être conservée à température ambiante avant ouverture pendant une durée plus longue (plusieurs mois). Les deux types de crème peuvent être utilisées pour la mise en oeuvre de l'invention.

Selon des formes de réalisation particulières :
▪ la préparation alimentaire présente un pourcentage en poids de composé de stabilisation compris entre 2% et 6%, avantageusement entre 4% et 5,5% ;
▪ la préparation alimentaire présente un pourcentage en poids de matière grasse par rapport à la matière sèche compris entre 0% et 70% ;
▪ la préparation alimentaire présente un pourcentage en poids d'eau par rapport au poids total de la préparation compris entre 50% et 85% ;
▪ la somme du pourcentage en poids de fromage frais et du pourcentage en poids de crème dans la préparation alimentaire est comprise entre 50% et 98,95%, avantageusement entre 70% et 85% ;
▪ la somme du pourcentage en poids de gélatine et du pourcentage en poids de composé de stabilisation dans la préparation alimentaire est comprise entre 2% et 7%, avantageusement entre 3% et 5% ;
▪ le rapport fromage frais/crème est compris entre 1/2 et 2, encore plus préférentiellement entre 2/3 et 3/2 ; et
▪ la préparation à base de fromage frais peut comprendre en outre des additifs tels que des arômes, des exhausteurs de goût, des épices, des herbes, des fruits, des légumes, du sel de cuisine, et/ou des matière grasses d'origine animale ou végétale.

L'invention a également pour objet un procédé de fabrication de la préparation alimentaire précédente, le procédé comprenant les étapes consistant à :
a) mélanger la crème, le fromage frais, la gélatine et au moins un composé de stabilisation ;
b) pasteuriser le produit issu de l'étape a), homogénéiser et conditionner à chaud en boyaux ;
c) solidifier le produit issu de l'étape b) par refroidissement ;
d) enlever les boyaux du produit issu de l'étape c) ;
e) découper en tranches le produit issu de l'étape d) ; puis
f) conditionner les tranches obtenues à l'étape e).

Selon des formes de réalisation particulières :
▪ l'étape a) peut comprendre, en outre, le mélange d'au moins un additif tels que des arômes, des exhausteurs de goût, des épices, des herbes, des fruits, des légumes, du sel de cuisine, et des matière grasses d'origine animale ou végétale ;
▪ le conditionnement peut se faire sous atmosphère gazeuse avec de l'azote (N₂), du dioxyde de carbone (CO₂) ou un mélange de ces gaz ; et
▪ l'épaisseur des tranches découpées lors de l'étape g) peut être comprise entre 1 mm et 20 mm.

Avantageusement le conditionnement se fait à une température de la préparation comprise entre 70 et 90°C. Avantageusement, le conditionnement en chambre froide se fait à une température comprise entre 1 et 10°C.

La texture du produit peut être évaluée de la façon suivante : On utilise un appareil Texture Analyser de type TX2, avec un spécimen d'essai cylindrique de diamètre 12 mm et une vitesse de pénétration de 1 mm/s. Dans ces conditions de test, le produit de l'invention sous forme d'une bûche, refroidi à une température de 5°C, présente une résistance à la pénétration supérieure ou égale à 1 000 g à une profondeur de pénétration de 20 mm.

La préparation à base de fromage frais selon l'invention présente comme avantages une texture à la fois suffisamment ferme pour permettre le tranchage et la manipulation des tranches en vue de leur conditionnement, et suffisamment souple pour permettre de l'étaler sur une tartine à l'aide d'un couteau. Les produits de l'art antérieur, lorsqu'ils sont étalés ont tendance à former des fragments tandis que ceux de l'invention forment une pâte crémeuse.

En outre, les préparations de l'invention ont un goût de fromage frais tandis que celles de l'art antérieur ont un aspect trop gélatineux.

### Exemple 1

| **Ingrédients** | **Quantité (%)** |
|---|---|
| Pâte de fromage frais | 38,00 |
| Crème | 40,79 |
| Eau | 10,00 |
| Gélatine | 1,00 |
| Agar-agar | 1,00 |
| Caroube | 0,40 |
| Carraghénane | 0,80 |
| Xanthane | 0,10 |
| Amidon modifié | 2,00 |
| Sel | 1,10 |
| Acide lactique | 0,10 |
| Arôme | 0,30 |
| Extrait d'herbes | 0,20 |
| Poudre d'ail | 0,20 |
| Préparation d'herbes | 4,00 |
| Boyau (avec des herbes et sans herbes) | 0,01 |
| TOTAL | 100 |

Pour obtenir cette préparation, le lait de départ est standardisé en matière grasse et protéine avant les étapes de pasteurisation et fermentation par acidification. Le lait fermenté est égoutté par un séparateur de caillé (fabrication du fromage frais) et un mélange de crème, de gélatine, des stabilisants et d'autres ingrédients (cf. formule ci-dessus) est additionné.

La crème est mélangée avec le fromage frais. La gélatine est mélangée avec les stabilisants (Agar-agar, Caroube, Carraghénate et Amidon modifié).

Cette étape de mélange dure environ 15 minutes

Le produit résultant est pasteurisé, homogénéisé et conditionné à 75°C en boyaux enrobés sur le côté intérieur avec des herbes (diamètre : 70 mm) ou en boyaux sans enrobage. Après la solidification du produit en chambre froide à 5°C, il est transporté au site de découpage et tempéré à la température de découpage -2°C-+2°C). Les boyaux sont enlevés avant le découpage et le produit est tranché (épaisseur : environ 3,0 mm) puis conditionné sous gaz en barquettes thermoformées.

### Exemple 2

| | Formule (%) |
|---|---|
| Pâte fraîche | 50,55 |
| Lait maigre | 27,20 |
| Crème fraîche | 10,00 |
| Gélatine | 1,00 |
| Agar-agar | 1,00 |
| Caroube | 0,40 |
| Carraghénane | 0,80 |
| Xanthane | 0,15 |
| Amidon modifié | 3,00 |
| Sel | 1,10 |
| Acide lactique | 0,10 |
| Arôme | 0,30 |
| Extrait d'herbes | 0,20 |
| Poudre d'ail | 0,20 |
| Préparation d'herbes | 4,00 |
| **TOTAL** | **100** |

On emploie le même mode opératoire qu'à l'exemple 1. Le fromage obtenu est allégé en matières grasses. Il possède néanmoins une tenue, un goût et une texture satisfaisantes.

## Revendications

1. Préparation alimentaire **caractérisée en ce qu'**elle comprend :
i. du fromage frais,
ii. de 0,65 à 1%, en poids par rapport au poids total de la préparation, de gélatine,
iii. de 1,05 à 6%, en poids par rapport au poids total de la préparation, d'au moins un composé de stabilisation choisi parmi les hydrocolloïdes végétaux,
iv. de façon facultative de la crème, le rapport en poids fromage frais/crème étant compris entre 1/3 et 1/0.

2. Préparation à base de fromage frais selon la revendication 1, **caractérisée en ce que** le composé stabilisant est choisi parmi : l'agar-agar, la farine de guar, les carraghénanes, la farine de caroube, la gomme xanthane, l'amidon, l'amidon modifié, la carboxyméthylcellulose, la pectine, les alginates, la gomme arabique, la gomme de tragacanthe, la farine de graines de caroube.

3. Préparation à base de fromage frais selon la revendication 1 ou la revendication 2, **caractérisée par** un pourcentage en poids total fromage frais + crème, par rapport au poids de la préparation, compris entre 50 et 98,95%.

4. Préparation à base de fromage frais selon l'une quelconque des revendications 1 à 3, **caractérisée en ce qu'**elle présente un pourcentage en poids de composé de stabilisation compris entre 2% et 6%, avantageusement entre 4% et 5,5%.

5. Préparation à base de fromage frais selon l'une quelconque des revendications 1 à 4, **caractérisée en ce qu'**elle présente un pourcentage en poids de matière grasse par rapport à la matière sèche compris entre 0% et 70%.

6. Préparation à base de fromage frais selon l'une quelconque des revendications 1 à 5, **caractérisée en ce qu'**elle présente un pourcentage en poids d'eau par rapport au poids total de la préparation compris entre 50% et 85%.

7. Préparation à base de fromage frais selon l'une quelconque des revendications 1 à 6, **caractérisée en ce que** la somme du pourcentage en poids de fromage frais et du pourcentage en poids de crème dans la préparation alimentaire est comprise entre 50% et 98,95%, avantageusement entre 70% et 85%.

8. Préparation à base de fromage frais selon l'une quelconque des revendications 1 à 7, **caractérisée en ce que** la somme du pourcentage en poids de gélatine et du pourcentage en poids de composé de stabilisation dans la préparation alimentaire est comprise entre 2% et 7%, avantageusement entre 3% et 5%.

9. Préparation à base de fromage frais selon l'une quelconque des revendications 1 à 8, **caractérisée en ce que** le rapport fromage frais/crème est compris entre 1/2 et 2, encore plus préférentiellement entre 2/3 et 3/2.

10. Préparation à base de fromage frais selon l'une quelconque des revendications 1 à 9, **caractérisée en ce que** la texture du produit, évaluée à l'aide d'un appareil Texture Analyser de type TX2, avec un spécimen d'essai cylindrique de diamètre 12 mm et une vitesse de pénétration de 1 mm/s, le produit étant sous forme d'une bûche, refroidi à une température de 5°C, présente une résistance à la pénétration supérieure ou égale à 1 000 g à une profondeur de pénétration de 20 mm.

11. Procédé de fabrication d'une préparation alimentaire selon l'une quelconque des revendications 1 à 10, **caractérisé en ce qu'**il comprend les étapes consistant à :
a) mélanger la crème, le fromage frais, la gélatine et au moins un composé de stabilisation ;
b) pasteuriser le produit issu de l'étape a), homogénéiser et conditionner à chaud en boyaux ;
c) solidifier le produit issu de l'étape b) par refroidissement ;
d) enlever les boyaux du produit issu de l'étape c) ;
e) découper en tranches le produit issu de l'étape d) ; puis
f) conditionner les tranches obtenues à l'étape e).

12. Procédé de fabrication selon la revendication 11, dans lequel l'épaisseur des tranches découpées lors de l'étape e) est comprise entre 1 mm et 20 mm.

## Patentansprüche

1. Lebensmittelzubereitung, **dadurch gekennzeichnet, dass** sie Folgendes umfasst:
i. Frischkäse,
ii. von 0,65 bis 1 Gew.-% im Verhältnis zum Gesamtgewicht der Zubereitung Gelatine,
iii. von 1,05 bis 6 Gew.-% im Verhältnis zum Gesamtgewicht der Zubereitung mindestens einer Stabilisatorverbindung, die unter den pflanzlichen Hydrokolloiden ausgewählt ist,
iv. wahlweise Rahm, wobei das Frischkäse/Rahm- Gewichtsverhältnis zwischen 1/3 und 1/0 enthalten ist.

2. Zubereitung auf Basis von Frischkäse nach Anspruch 1, **dadurch gekennzeichnet, dass** die Stabilisatorverbindung unter Folgendem ausgewählt ist: Agar-Agar, Guarmehl, Carrageenen, Johannisbrotmehl, Xanthan-Gummi, Stärke, modifizierte Stärke, Carboxymethylcellulose, Pektin, Alginaten, Gummi arabicum, Traganthgummi, Johannisbrotkernmehl.

3. Zubereitung auf Basis von Frischkäse nach Anspruch 1 oder Anspruch 2, **gekennzeichnet durch** ein Gesamtgewicht Frischkäse + Rahm, das im Verhältnis zum Gewicht der Zubereitung zwischen 50 und 98,95% enthalten ist.

4. Zubereitung auf Basis von Frischkäse nach einem der Ansprüche 1 bis 3, **dadurch gekennzeichnet, dass** sie einen Gewichtsprozentsatz an Stabilisatorverbindung aufweist, der zwischen 2% und 6%, vorteilhafterweise zwischen 4 und 5,5%, enthalten ist.

5. Zubereitung auf Basis von Frischkäse nach einem der Ansprüche 1 bis 4, **dadurch gekennzeichnet, dass** sie einen Gewichtsprozentsatz an Fett im Verhältnis zur Trockenmasse aufweist, der zwischen 0% und 70% enthalten ist.

6. Zubereitung auf Basis von Frischkäse nach einem der Ansprüche 1 bis 5, **dadurch gekennzeichnet, dass** sie einen Gewichtsprozentsatz an Wasser im Verhältnis zum Gesamtgewicht der Zubereitung aufweist, der zwischen 50% und 85% enthalten ist.

7. Zubereitung auf Basis von Frischkäse nach einem der Ansprüche 1 bis 6, **dadurch gekennzeichnet, dass** die Summe des Gewichtsprozentsatzes an Frischkäse und des Gewichtsprozentsatzes an Rahm in der Lebensmittelzubereitung zwischen 50% und 98,95%, vorteilhafterweise zwischen 70% und 85%, enthalten ist.

8. Zubereitung auf Basis von Frischkäse nach einem der Ansprüche 1 bis 7, **dadurch gekennzeichnet, dass** die Summe des Gewichtsprozentsatzes an Gelatine und des Gewichtsprozentsatzes an Stabilisatorverbindung in der Lebensmittelzubereitung zwischen 2% und 7%, vorteilhafterweise zwischen 3% und 5%, enthalten ist.

9. Zubereitung auf Basis von Frischkäse nach einem der Ansprüche 1 bis 8, **dadurch gekennzeichnet, dass** das Frischkäse/Rahm-Verhältnis zwischen 1/2 und 2, vorzugsweise zwischen 2/3 und 3/2, enthalten ist.

10. Zubereitung auf Basis von Frischkäse nach einem der Ansprüche 1 bis 9, **dadurch gekennzeichnet, dass** die Textur des Produkts, die mittels eines Texture-Analyser-Geräts vom Typ TX2 mit einer zylindrischen Testprobe mit einem Durchmesser von 12 mm und einer Eindringgeschwindigkeit von 1 mm/s bewertet wird, wobei das Produkt die Form einer Rolle aufweist, auf eine Temperatur von 5 °C gekühlt ist, einen Eindringwiderstand aufweist, der bei einer Eindringtiefe von 20 mm größer oder gleich 1000 g ist.

11. Verfahren zur Herstellung einer Lebensmittelzubereitung nach einem der Ansprüche 1 bis 10, **dadurch gekennzeichnet, dass** es die Schritte umfasst, die aus Folgendem bestehen:
a) Mischen des Rahms, des Frischkäses, der Gelatine und mindestens einer Stabilisatorverbindung;
b) Pasteurisieren des Produkts aus Schritt a), Homogenisieren und Heißverpacken in Schläuchen;
c) Verfestigen des Produkts aus Schritt b) durch Abkühlung;
d) Entfernen der Schläuche von dem Produkt aus Schritt c);
e) Schneiden des Produkts aus Schritt d) in Scheiben; und dann
f) Verpacken der im Schritt e) erhaltenen Scheiben.

12. Herstellungsverfahren nach Anspruch 11, wobei die Dicke der im Schritt e) geschnittenen Scheiben zwischen 1 mm und 20 mm enthalten ist.

## Claims

1. A food preparation, **characterized in that** it comprises:
i. fresh cheese,
ii. 0.65 to 1 weight % of gelatine relative to the total weight of the preparation,
iii. 1.05 to 6 weight %, relative to the total weight of the preparation, of at least one stabilising compound selected from among plant hydrocolloids,
iv. optionally cream, the fresh cheese/cream weight ratio being between 1:3 and 1:0.

2. A fresh cheese preparation according to claim1, **characterized in that** the stabilising compound is selected from among: agar-agar, guar flour, carrageenans, carob flour, xanthan gum, starch, modified starch, carboxymethylcellulose, pectin, alginates, gum arabic, tragacanth gum, carob seed flour.

3. The fresh cheese preparation according to claim 1 or claim 2, **characterized by** a total fresh cheese + cream weight percentage relative to the weight of the preparation of between 50 and 98.95 %.

4. The fresh cheese preparation according to any of claims 1 to 3, **characterized in that** it has a weight percentage of stabilising compound of between 2 % and 6 %, advantageously between 4 % and 5.5 %.

5. The fresh cheese preparation according to any of claims 1 to 4, **characterized in that** it has a weight percentage of fat relative to dry matter of between 0 % and 70 %.

6. The fresh cheese preparation according to any of claims 1 to 5, **characterized in that** it has weight percentage of water relative to the total weight of the preparation of between 50 % and 85 %.

7. The fresh cheese preparation according to any of claims 1 to 6, **characterized in that** the sum of the weight percentage of fresh cheese and weight percentage of cream in the food preparation is between 50 % and 98.95 %, advantageously between 70 % and 85 %.

8. The fresh cheese preparation according to any of claims 1 to 7, **characterized in that** the sum of the weight percentage of gelatine and the weight percentage of stabilising compound in the food preparation is between 2 % and 7 %, advantageously between 3 % and 5 %.

9. The fresh cheese preparation according to any of claims 1 to 8, **characterized in that** the fresh cheese/cream ratio is between 1:2 and 2, more preferably between 2:3 and 3:2.

10. The fresh cheese preparation according to any of claims 1 to 9, **characterized in that** the texture of the product evaluated using a Texture Analyser of TX2 type, with a cylindrical test specimen of diameter 12 mm and penetration rate of 1 mm /s, the product being log-shaped and cooled to a temperature of 5°C, has penetration resistance of 1000 g or higher at a penetration depth of 20 mm.

11. A method to produce a food preparation according to any of claims 1 to 10, **characterized in that** it comprises the steps of:
a) mixing the cream, fresh cheese, gelatine and at least one stabilising compound;
b) pasteurising the product obtained after step a), homogenising and hot packing thereof in casings;
c) solidifying the product obtained after step b) by cooling;
d) removing the casings from the product obtained after step c)
e) slicing the product obtained after step d); then
f) packaging the slices obtained at step e).

12. The production method according to claim 11 wherein the thickness of the slices cut at step e) is between 1 mm and 20 mm.
